# EUROPEAN PATENT APPLICATION

(11) **EP 1 260 466 A1**
(43) Date of publication of application: **27.11.2002**
(21) Application number: 02011454.2
(22) Date of filing: 24.05.2002
(51) Int. Cl.: B65G 47/54, B65G 21/20

(54) **Transfer station for a conveyor**

(30) Priority: 25.05.2001 IT TO20010498
(71) Applicant: ISP Systems S.r.l., 61100 Pesaro (IT)
(72) Inventor: Pritelli, Guiseppe, 47033 Cattolica (IT)
(74) Representative: Cerbaro, Elena, Dr.

(57) **Abstract**

A line for conveying a wood panel (2) or similar is defined by two conveying devices (6, 7) for feeding the panel (2) respectively in a first and second direction (8, 9) crosswise to each other; one of the conveying devices (6, 7) having a number of spaced first conveying members (11); and the other of the conveying devices (6, 7) having a number of second conveying members (23), which alternate with the first conveying members (11) and are movable with respect to the first conveying members (11) in a third direction (17) perpendicular to the first and second direction (8, 9), and at least one third conveying member (26) located so as to cooperate - at a transfer station (10) connecting the two conveying devices (6, 7) - with the second conveying members (23) to engage two opposite faces (3a, 3b) of the panel (2).

## Description

The present invention relates to a line for conveying a wood panel or similar.

In wood panel processing, a panel conveyor line is known comprising a first conveying device for feeding the panel in a first direction; a second conveying device for feeding the panel in a second direction substantially crosswise to the first; and a transfer station connecting the two conveying devices.

The first conveying device normally comprises a number of substantially parallel, spaced conveyor belts; and the second conveying device comprises a number of conveyor rollers, which alternate with the conveyor belts, feed the panel in the second direction, and move in a third direction, substantially perpendicular to the first and second direction, to release the panel from the conveyor belts.

Since the panel is only maintained contacting the conveyor rollers by its own weight, known lines of the type described above have several drawbacks, foremost of which is the necessity, on some lines, to operate the conveyor rollers in such a way as to avoid accelerating the panel over and above a relatively low given value resulting in slippage of the panel with respect to the conveyor rollers.

Moreover, the second conveying device being intrinsically inaccurate, on account of the conveyor rollers failing to keep the panel in a precise given position, known lines of the above type are relatively complex and expensive, by requiring positioning means, which, once the panel is moved in the second direction, provide for positioning the panel accurately with respect to an operating unit downstream from the line.

It is an object of the present invention to provide a line for conveying a wood panel or similar, designed to eliminate the aforementioned drawbacks.

According to the present invention, there is provided a line for conveying a wood panel or similar having two substantially parallel faces, the line comprising a first conveying device for feeding said panel in a first direction and along a conveying surface substantially parallel to said faces; a second conveying device for feeding the panel in a second direction substantially crosswise to said first direction; and a transfer station connecting said first and said second conveying device; said first conveying device comprising a number of substantially parallel, spaced first conveying means; said second conveying device comprising a number of second conveying means alternating with said first conveying means; and said first and second conveying means being movable with respect to one another in a third direction substantially perpendicular to said first and said second direction; characterized in that said second conveying device also comprises third conveying means at least at said transfer station; said second and third conveying means engaging a first and a second of said two faces respectively.

A non-limiting embodiment of the present invention will be described by way of example with reference to the accompanying drawings, in which:
Figure 1 shows a schematic view in perspective of a preferred embodiment of the conveyor line according to the present invention;
Figures 2 to 5 show schematic views of the Figure 1 line in successive operating positions;
Figure 6 is similar to Figure 1, and shows a further embodiment of the conveyor line according to the present invention;
Figures 7 to 9 are similar to Figures 2 to 5, and show schematic views of the Figure 6 line in successive operating positions;
Figure 10 is similar to Figures 7 and 9, and shows the conveying of a different panel from that in Figures 6 to 9;
Figure 11 shows a block diagram of an electronic central control unit of the Figure 6 line.

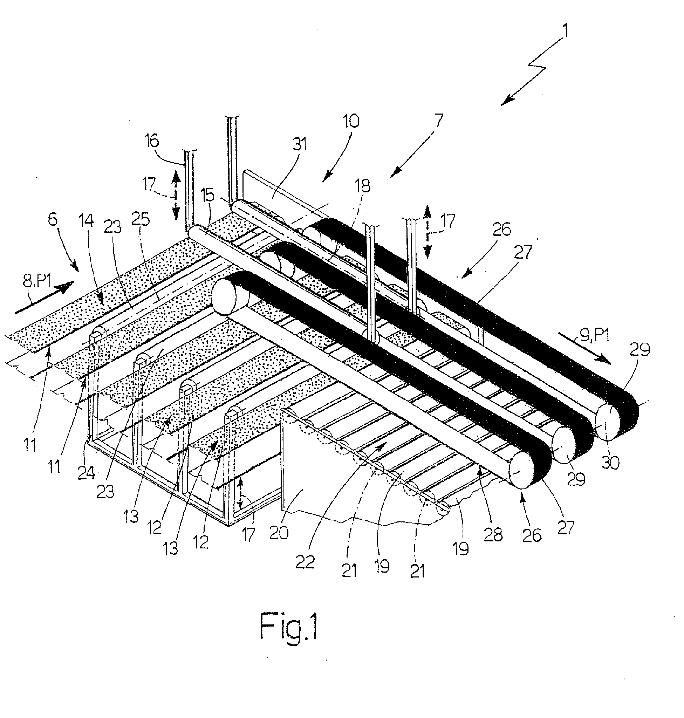

With reference to Figures 1 to 5, number 1 indicates as a whole a line for conveying, along a given path P1, a substantially parallelepiped-shaped wood panel 2 or similar comprising two parallel lateral faces 3, two parallel lateral faces 4 perpendicular to faces 3, and two parallel lateral faces 5 perpendicular to faces 3 and 4.

Line 1 comprises two conveying devices 6, 7 for respectively feeding panel 2 in a given direction 8, and in a direction 9 substantially crosswise to direction 8; and a transfer station 10 connecting devices 6 and 7.

Device 6 comprises a number of belt conveyors 11, which are fitted to a fixed frame (not shown), move in respective vertical planes substantially parallel to one another and to direction 8, and are equally spaced in direction 9.

Each conveyor 11 comprises a belt 12 looped about a pair of pulleys (not shown) - one of which is powered in time with one pulley (not shown) of each of the other conveyors 11 - mounted to rotate about respective axes (not shown) substantially parallel to direction 9.

Each belt 12 has a conveying branch 13 substantially coplanar with branches 13 of the other belts 12, so as to define a conveying surface 14 for panel 2, which is positioned on conveyors 11 with one of faces 3 (hereinafter indicated 3a) contacting branches 13, with faces 4 parallel to direction 8, and with faces 5 crosswise to direction 8.

At station 10, device 6 has a succession of conveyor rollers 15 equally spaced in direction 8 and fitted - so as to rotate about respective axes 18 substantially parallel to direction 9 - to a frame 16, which is movable linearly, with respect to said fixed frame (not shown), in a direction 17 perpendicular to directions 8 and 9.

Device 7 comprises a succession of conveyor rollers 19, which are located downstream from station 10 in direction 9, are fitted to a fixed frame 20 to rotate about respective axes 21 substantially parallel to direction 8, and feed panel 2 in direction 9 and along a conveying surface 22 substantially parallel to surface 14 and separated from surface 14 by a distance approximately equal to but no less than the thickness of panel 2 measured parallel to direction 17.

At station 10, device 7 also comprises a number of conveyor rollers 23, which alternate with conveyors 11 and are fitted - so as to rotate about respective axes 25 substantially parallel to direction 8 - to a frame 24, which is movable linearly in direction 17 with respect to said fixed frame (not shown).

Device 7 also comprises a number of belt conveyors 26, which extend partly over rollers 23 and partly over rollers 19, alternate with rollers 15, and are fitted to said fixed frame (not shown).

Each conveyor 26 comprises a belt 27, which is movable in a vertical plane substantially parallel to direction 9, has a conveying branch 28 substantially coplanar with branches 28 of the other belts 27, and is looped about a pair of pulleys 29 - one of which is powered in time with one pulley 29 of each of the other conveyors 26 - mounted to rotate about respective axes 30 substantially parallel to direction 8.

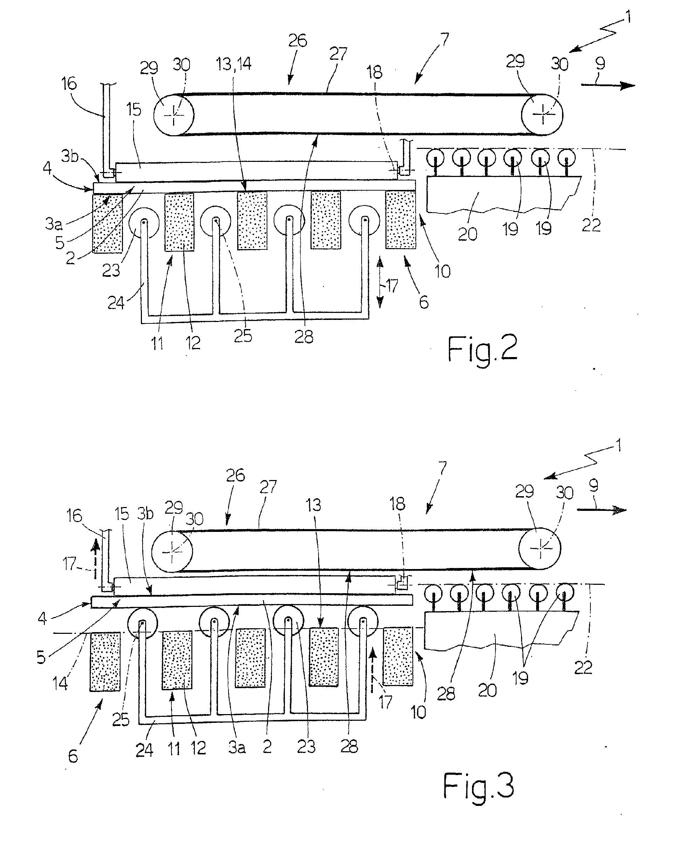

Operation of line 1 will now be described with reference to Figures 2 to 5, and as of when:
panel 2 is fed by conveyors 11 in direction 8 towards station 10;
rollers 23 are set to a lowered rest position beneath conveying surface 14; and
rollers 15 are set to a raised rest position.

When panel 2 reaches the input of station 10, rollers 15 are moved into a lowered work position (Figure 2) to engage the top face 3 (hereinafter indicated 3b); and belts 12 and rollers 15 feed panel 2 in direction 8 into contact with a stop member 31 extending crosswise to direction 8.

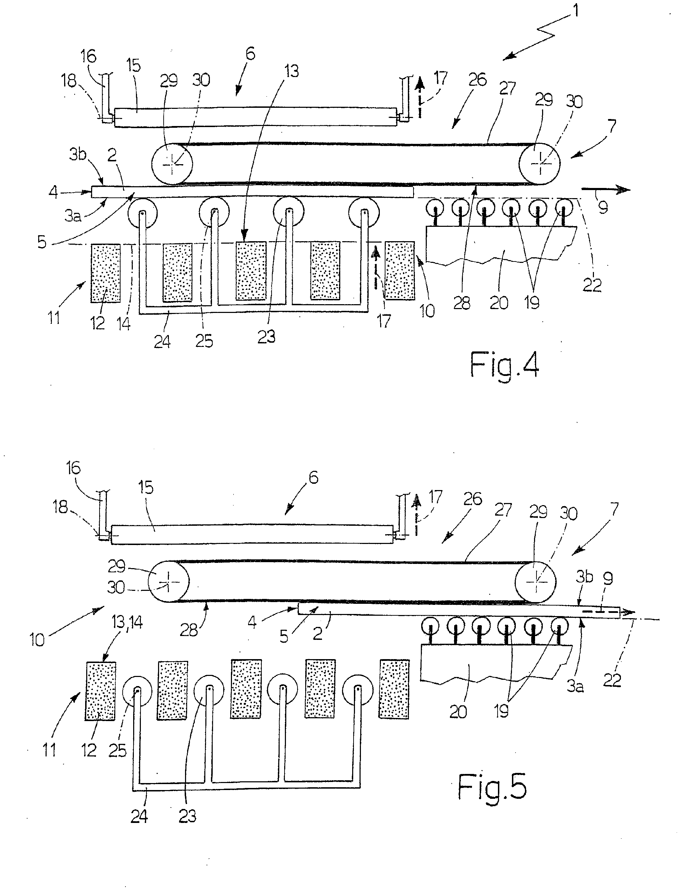

At this point, conveyors 11 are deactivated, and rollers 23 are raised in direction 17 to engage the bottom face 3a and so cooperate with rollers 15 (Figure 3) to move panel 2 between conveying surfaces 14 and 22 and bring top face 3b into contact with belts 27 of conveyors 26 (Figure 4).

With reference to Figure 4, rollers 15 are raised to release top face 3b; conveyors 26 are activated to cooperate with rollers 19 and feed panel 2 in direction 9 (Figure 5); and rollers 23 are moved into the lowered rest position.

In connection with the above, only a relatively small portion of panel 2 need be engaged simultaneously by rollers 19 and belts 27 to hold panel 2 on conveying surface 22, so that rollers 23 can be moved back into the lowered rest position, and another panel 2 can be fed into station 10.

Moreover, since panel 2 is always engaged simultaneously by bottom face 3a and top face 3b at station 10, line 1 and, in particular, conveying device 7 can impart to panel a relatively high degree of acceleration, thus greatly reducing the time taken to feed panel 2 along line 1.

In a variation not shown, line 1 comprises a conveying device located downstream from station 10 in direction 8, and for feeding panels 2 along conveying surface 14 defined by belts 12, so that panels 2 can be fed downstream from station 10 either in direction 9 by means of device 7, or in direction 8 by means of said conveying device (not shown). More specifically, as a panel 2 is being fed in direction 9 by conveyors 26 and rollers 19, another panel 2 can be fed in direction 8 as soon as rollers 23 are moved into the lowered rest position.

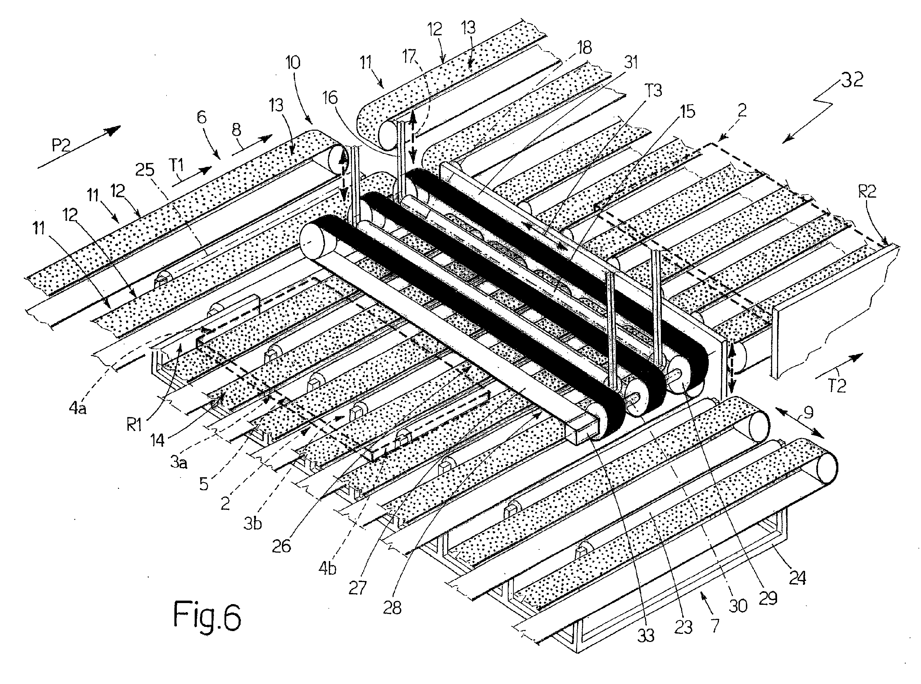

The variation shown in Figures 6 to 11 relates to a line 32 for conveying a panel 2 along a given path P2 extending between two known edging machines (not shown) having respective substantially vertical reference surfaces R1, R2 parallel to each other.

In this case, conveyors 11 are also located downstream from stop member 31 in direction 8, so that device 6 can feed panel 2 along an initial portion T1 and an end portion T2 of path P2; station 10 is located at an end portion of portion T1; device 7 feeds panel 2 in direction 9 along an intermediate portion T3 of path P2, and has no fixed conveyor rollers 19; and panel 2 is fed along portion T1 with one of faces 4 (hereinafter indicated 4a) substantially coplanar with surface R1.

Portions T1 and T2 may obviously define the output portion and input portion respectively of the two edging machines (not shown).

One of pulleys 29 of each conveyor 26 is fitted - together with a corresponding pulley 29 of each of the other conveyors 26 - to an output shaft of a reversible motor 33 (in the example shown, an electric brushless motor) for rotating belts 27 clockwise or anticlockwise.

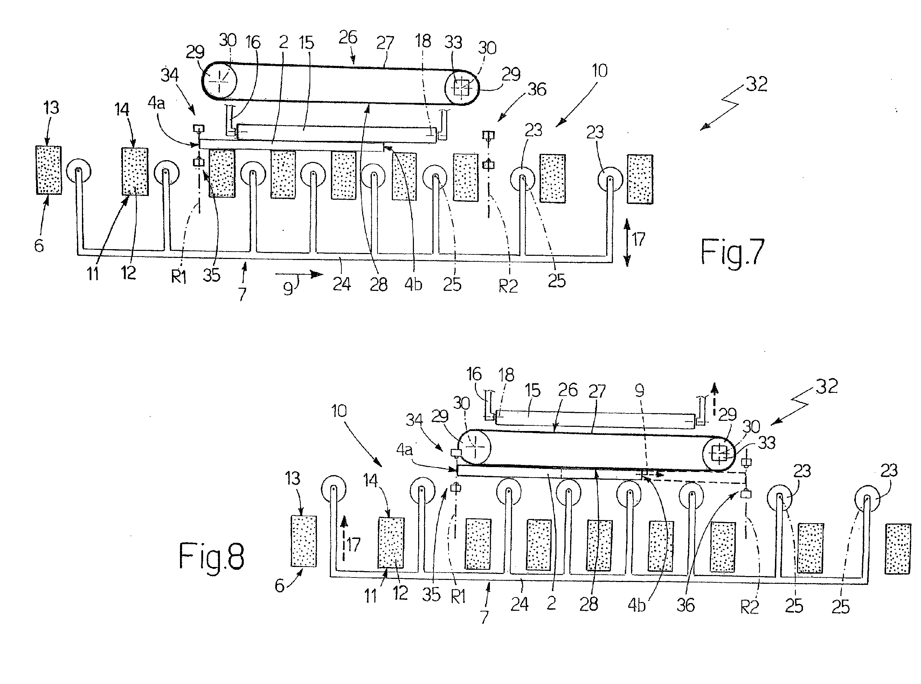

With reference to Figures 7 to 11, line 32 comprises a control unit 34 in turn comprising a position sensor 35 on surface R1 for determining the position of panel 2 with respect to surface R1; a position sensor 36 on surface R2 for determining the position of panel 2 with respect to surface R2; and an electronic central control unit 37 for controlling motor 33 in response to a signal from sensor 36.

Operation of line 32 will now be described with reference to Figures 7 to 10, and as of when:
panel 2 is fed by conveyors 11 in direction 8 and along portion T1 of path P2;
rollers 23 are set to the lowered rest position; and
rollers 15 are positioned at a distance from surface 14, measured parallel to direction 17, substantially equal to the thickness of panel 2, also measured parallel to direction 17, so as to engage top face 3b of panel 2 (Figure 7).

Panel 2 is therefore engaged, along the end portion of portion T1, by both belts 12 and rollers 15, and is fed in direction 8 into contact with stop member 31, which is movable linearly in direction 17 to and from a work position (Figure 6). In this connection, it should be pointed out that conveyors 11 are selectively controlled so that panel 2 comes into contact with member 31 at substantially zero traveling speed.

Once panel 2 is positioned contacting member 31, conveyors 11 are deactivated; rollers 23 are raised in direction 17 to engage face 3a and cooperate with rollers 15 to release panel 2 from conveyors 11 and bring face 3b into contact with belts 27 (Figure 8); and rollers 15 are raised further in direction 17 to release face 3b.

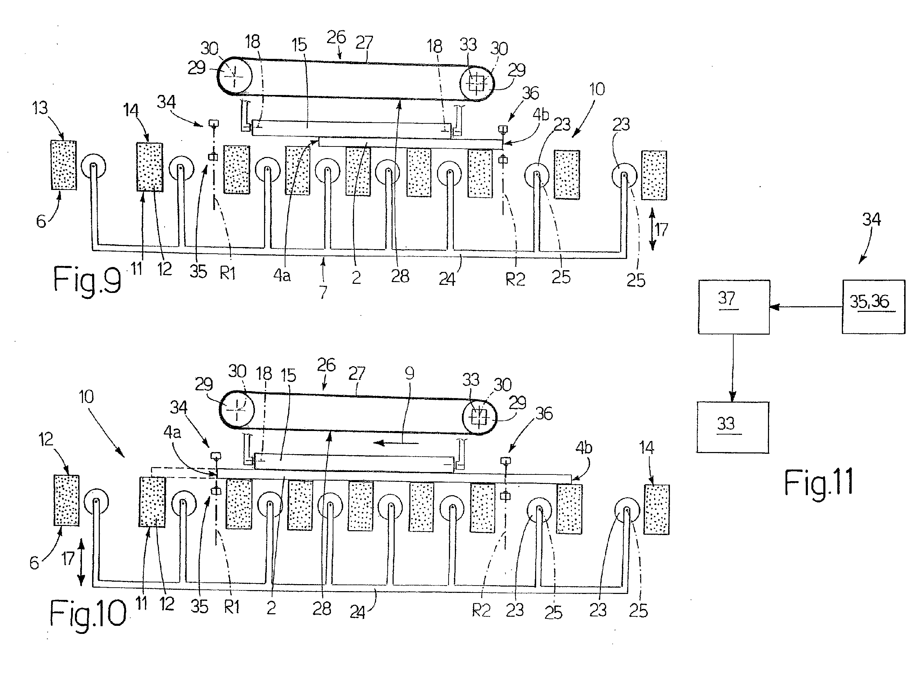

At this point, sensor 36 determines the position of panel 2 with respect to surface R2, i.e. the width of panel 2 measured parallel to direction 9, and, by means of central control unit 37, commands motor 33 to rotate belts 27 anticlockwise when the width of panel 2 is less than the distance between surfaces R1 and R2 (Figure 8), and clockwise when the width of panel 2 is greater than the distance between surfaces R1 and R2 (Figure 10), so as to position face 4b coplanar with surface R2.

Once face 4b is coplanar with surface R2, sensor 36 commands deactivation of conveyors 26; rollers 15 are lowered in direction 17 to cooperate with rollers 23 to release panel 2 from belts 27 and bring panel 2 again into contact with belts 12; and rollers 23 are moved into the lowered rest position (Figure 9).

Finally, conveyors 11 are activated to feed panel 2 in direction 8 along portion T2 of path P2.

Line 32 therefore provides for extremely accurate positioning of face 4b coplanar with surface R2, by virtue of panel 2, as it moves in directions 9 and 17, always being engaged simultaneously by bottom face 3a and top face 3b, so that conveying device 7 can impart to panel 2 a relatively high degree of acceleration and/or deceleration, thus greatly reducing the time taken to feed panel 2 along line 32.

## Claims

1. A line for conveying a wood panel or similar having two substantially parallel faces (3a, 3b), the line comprising a first conveying device (6) for feeding said panel (2) in a first direction (8) and along a first conveying surface (14) substantially parallel to said faces (3a, 3b); a second conveying device (7) for feeding the panel (2) in a second direction (9) substantially crosswise to said first direction (8); and a transfer station (10) connecting said first and said second conveying device (6, 7); said first conveying device (6) comprising a number of substantially parallel, spaced first conveying means (11); said second conveying device (7) comprising a number of second conveying means (23) alternating with said first conveying means (11); and said first and second conveying means (11, 23) being movable with respect to one another in a third direction (17) substantially perpendicular to said first and said second direction (, 9); **characterized in that** said second conveying device (7) also comprises third conveying means (26) at least at said transfer station; said second and third conveying means (23, 26) engaging a first and a second of said two faces (3a, 3b) respectively.

2. A line as claimed in Claim 1, wherein each of said first conveying means (11) comprises at least one belt conveyor, and each of said second conveying means (23) comprises at least one conveyor roller.

3. A line as claimed in Claim 1, wherein each of said first conveying means (11) comprises at least one conveyor roller, and each of said second conveying means (23) comprises at least one belt conveyor.

4. A line as claimed in any one of the foregoing Claims, wherein said second conveying device (7) comprises a number of said third conveying means (26) spaced apart and substantially parallel to one another; said first conveying device (6) comprising a number of fourth conveying means (15) alternating with said third conveying means (26) and movable in said third direction (17) to cooperate with said second conveying means (23) to move said panel (2) with respect to said first conveying means (11).

5. A line as claimed in Claim 4, wherein each of said third conveying means (26) comprises at least one belt conveyor, and each of said fourth conveying means (15) comprises at least one conveying roller.

6. A line as claimed in any one of the foregoing Claims, and also comprising stop means (31) crosswise to said first direction (8) at said transfer station (10); said first conveying device (6) being controllable selectively, so that said panel (2) comes into contact with said stop means (31) at substantially zero traveling speed.

7. A line as claimed in any one of the foregoing Claims, wherein said second conveying device (7) also comprises fifth conveying means (19) located downstream from said transfer station (10) in said second direction (9); said third conveying means (26) extending at least partly downstream from the transfer station (10) in said second direction (9) so as to cooperate with said fifth conveying means (19) to move said panel (2) in the second direction (9).

8. A line as claimed in Claim 7, wherein said panel (2) has a given thickness measured parallel to said third direction (17); said fifth conveying means (19) defining, for said panel (2), a second conveying surface (22) separated from said first conveying surface (14) by a distance approximately equal to but no less than said thickness.

9. A line as claimed in any one of the foregoing Claims, and also comprising control means (34) for controlling the position of said panel (2) with respect to a reference surface (R2) substantially crosswise to said second direction (9), and for controlling said second conveying device (7) so as to position a further face (4b) of said panel (2) coplanar with said reference surface (R2); said second conveying device (7) being a reversible conveying device for selectively moving the panel (2) in said second direction (9) in response to a signal from said control means (34).

10. A line as claimed in Claim 9, wherein said control means (34) comprise at least one sensor (36) on said reference surface (R2).

11. A line as claimed in Claim 10, wherein said sensor (36) is an optical or magnetic position sensor.
